# EUROPÄISCHE PATENTSCHRIFT

(11) **EP 4 116 596 B1**
(45) Veröffentlichungstag und Bekanntmachung des Hinweises auf die Patenterteilung: **01.11.2023**
(21) Anmeldenummer: 21184817.1
(22) Anmeldetag: 09.07.2021
(51) Int. Cl.: F16D 3/33

(54) **DOPPELKREUZGELENK MIT EINER RADIAL BEWEGBAREN ZENTRIERSCHEIBE FÜR DIE BEIDE KREUZGELENKE**
DOUBLE UNIVERSAL JOINT WITH A RADIAL MOVABLE CENTRING DISC FOR THE TWO JOINTS WITH CROSS-MEMBERS
DOUBLE JOINT UNIVERSEL AVEC UN DISQUE DE CENTRAGE RADIALEMENT MOBILE POUR LES DEUX CROISILLONS

(43) Veröffentlichungstag der Anmeldung: 11.01.2023
(73) Patentinhaber: Walterscheid GmbH, 53797 Lohmar (DE)
(72) Erfinder: HECTOR, Martin, 53721 Siegburg (DE); LITTAU, Matthias, 53347 Alfter (DE)
(74) Vertreter: Neumann Müller Oberwalleney Patentanwälte PartG mbB

(56) Entgegenhaltungen:
- EP-A1- 3 643 938
- DE-A1- 10 135 347
- JP-A- H 084 780
- JP-A- H06 117 444
- JP-A- 2001 140 920
- US-A- 724 068
- US-A- 5 419 740

## Beschreibung

Die Erfindung betrifft ein zentriertes Doppelkreuzgelenk, das ein Gehäuse mit einer ersten inneren Gelenkgabel und einer zweiten inneren Gelenkgabel, eine erste äußere Gelenkgabel, die über ein erstes Zapfenkreuz gelenkig mit der ersten inneren Gelenkgabel gelenkig verbunden ist, und eine zweite äußere Gelenkgabel, die über ein zweites Zapfenkreuz gelenkig mit der zweiten inneren Gelenkgabel gelenkig verbunden ist, aufweist. Im Gehäuse ist eine Ringausnehmung um eine Längsachse des Gehäuses angeordnet. Ferner weist das zentrierte Doppelkreuzgelenk eine Führungsscheibe auf, die in der Ringausnehmung des Gehäuses radial verstellbar geführt ist, wobei die beiden äußeren Gelenkgabeln gelenkig mit der Führungsscheibe gekoppelt sind. Zwei Schwimmscheiben sind in axialer Richtung beidseitig der Führungsscheibe in der Ringausnehmung angeordnet.

Ein solches zentriertes Doppelkreuzgelenk ist aus der EP 1 253 338 A1 und der EP 1 277 979 A1 bekannt. Bei den dort beschriebenen zentrierten Doppelkreuzgelenken sind die zwei äußeren Gelenkgabeln jeweils über ein Zapfenkreuz mit den zwei inneren Gelenkgabeln, die jeweils an einem Lagergehäuseabschnitt angeordnet sind, gelenkig verbunden. Die Lagergehäuseabschnitte sind miteinander verschweißt und umgrenzen die Ringausnehmung, in der die Führungsscheibe unter Zwischenschaltung der schwimmend angeordneten ringförmigen Schwimmscheiben radial verschiebbar gelagert ist. Die Führungsscheibe weist zentral einen Führungsabschnitt mit beidseitig vorstehenden Zentrieransätzen auf. Dieser weist von seinen Stirnflächen ausgehend eine zentrale Bohrung auf. Die äußeren Gelenkgabeln, deren Gabelarme über eine Brücke miteinander verbunden sind, besitzen jeweils einen Lagerzapfen, auf dem ein Lagerinnenring mit sphärischer Außenfläche aufgenommen ist. Der Lagerzapfen greift in die Lagerbohrung des Führungsabschnitts der Führungsscheibe ein und ist dort über einen Lageraußenring mit sphärischer Innenfläche, in die die sphärische Außenfläche des Lagerinnenrings aufgenommen ist, gelagert. Die Innen- und Außendurchmesser der Schwimmscheiben stehen in einem solchen Verhältnis zu den Durchmessern der Ringausnehmung und der Führungsscheibe, dass die Ringausnehmung in allen Positionen der Verschiebung der Führungsscheibe nach außen hin geschlossen ist.

Aufgrund des erforderlichen Radialspiels zwischen den Schwimmscheiben und dem zentralen Führungsabschnitt der Führungsscheibe einerseits und dem Radialspiel zwischen den Schwimmscheiben und der Ringausnehmung andererseits sind die Schwimmscheiben zumindest in einem nicht vollständig abgewinkelten Zustand des Doppelkreuzgelenks mit Radialspiel in der Ringausnehmung aufgenommen. Dies kann dazu führen, dass sich bei nicht vollständig abgewinkeltem Zustand des Doppelkreuzgelenks die Schwimmscheiben radial bewegen und hierdurch Geräusche erzeugen.

EP 1 435 466 A1 offenbart ein Doppelkreuzgelenk mit einem ähnlichen Aufbau der voran genannten Doppelkreuzgelenke, wobei die Ringausnehmung nach außen hin effektiver abgedichtet werden soll, damit Schmiermittel nicht aus der Ringausnehmung austreten kann. Hierzu sind die Schwimmscheiben in Form von Tellerfedern gestaltet. Die Tellerfedern stützen sich jeweils mit einer radial inneren umlaufenden Kante gegen die Führungsscheibe und mit einer radial äu-ßeren umlaufenden Kante gegen eine axiale Führungsfläche der Ringausnehmung ab. Die Tellerfedern sind hierbei zwischen der Führungsscheibe und der jeweiligen Führungsfläche der Ringausnehmung axial verspannt. Hierdurch ergibt sich zum einen eine Abdichtung an den umlaufenden Kanten der Tellerfedern. Zum anderen erhöht sich die Reibkraft, die zwischen den Tellerfedern und der Führungsscheibe sowie der Führungsflächen der Ringausnehmung entstehen. Dadurch wird ein freies radiales Bewegen der Tellerfedern reduziert oder sogar vermieden. Dies führt auch zu geringeren Geräuschen, die durch ein radiales Anschlagen der Tellerfedern gegen eine radial äußere Wand der Ringausnehmung oder den Zentrieransätzen an der Führungsscheibe entstehen können. Jedoch entsteht zwischen den Tellerfedern und der Führungsscheibe sowie den Führungsflächen der Ringausnehmung ein Linienkontakt mit hohen Flächenpressungen. Darüber hinaus findet eine Reibung an den Tellerfedern selbst bei kleinen Beugewinkeln des Doppelkreuzgelenks statt, da sich die Führungsscheibe auf einer Kreisbahn im Gehäuse bewegt und in Kontakt zu den Tellerfedern entlang gleitet. Beides führt zu einem erhöhten Verschleiß.

Weitere gattungsgemäße, zentrierte Doppelkreuzgelenke gehen aus den Dokumenten EP 3 643 938 A1, JP 2001 140 920 A und JP H06 117 444 A hervor.

Aufgabe der folgenden Erfindung ist es, ein zentriertes Doppelkreuzgelenk bereitzustellen, bei dem durch die Schwimmscheiben hervorgerufene Geräusche reduziert oder vermieden werden.

Die Aufgabe wird erfindungsgemäß durch ein zentriertes Doppelkreuzgelenk mit den Merkmalen des Anspruchs 1 gelöst, das ein Gehäuse mit einer ersten inneren Gelenkgabel und einer zweiten inneren Gelenkgabel, eine erste äußere Gelenkgabel, die über ein erstes Zapfenkreuz gelenkig mit der ersten inneren Gelenkgabel gelenkig verbunden ist, und eine zweite äußere Gelenkgabel, die über ein zweites Zapfenkreuz gelenkig mit der zweiten inneren Gelenkgabel gelenkig verbunden ist, aufweist, Im Gehäuse ist eine Ringausnehmung um eine Längsachse des Gehäuses angeordnet. Ferner weist das zentrierte Doppelkreuzgelenk eine Führungsscheibe auf, die in der Ringausnehmung des Gehäuses radial verstellbar geführt ist, wobei die beiden äußeren Gelenkgabeln gelenkig mit der Führungsscheibe gekoppelt sind. Zwei Schwimmscheiben sind in axialer Richtung beidseitig der Führungsscheibe in der Ringausnehmung angeordnet. Das Gehäuse, die Schwimmscheiben oder die Führungsscheibe sind dabei eine magnetische Kraft auf die Schwimmscheiben in Richtung der Längsachse ausübend magnetisiert.

Das Gehäuse, die Schwimmscheiben oder die Führungsscheibe können jeweils insgesamt magnetisiert sein oder bereichsweise magnetisiert sein. Bei einer bereichsweisen Magnetisierung können separate Elemente, wie zum Beispiel Permanentmagnete, vorgesehen sein, die mit dem Gehäuse, den Schwimmscheiben oder der Führungsscheibe verbunden sind. Diese Verbindung separater Elemente ist im Sinne der Erfindung auch als Magnetisierung zu verstehen.

Im Falle einer Magnetisierung des Gehäuses werden die Schwimmscheiben aufgrund der Magnetkräfte axial entlang der Längsachse jeweils an das Gehäuse heran bewegt bzw. heran gezogen. Bei einer Bewegung der Schwimmscheiben radial zur Längsachse und relativ zum Gehäuse entstehen somit zwischen den Schwimmscheiben und dem Gehäuse Reibkräfte, die ein freies hin und her bewegen, wodurch Geräusche entstehen würden, verhindert oder reduziert werden.

Dasselbe gilt bei einer Magnetisierung der Führungsscheibe, bei der die Schwimmscheiben axial entlang der Längsachse an die Führungsscheibe heran bewegt werden, sodass bei einer radialen Bewegung der Schwimmscheiben Reibkräfte zwischen den Schwimmscheiben und der Führungsscheibe entstehen.

Alternativ können auch die Schwimmscheiben derart magnetisiert sein, dass sie entweder an das Gehäuse heran bewegt werden oder an die Führungsscheibe heran bewegt werden und sich entsprechende Reibkräfte einstellen.

Die Ringausnehmung kann durch eine erste Führungsfläche und eine zweite Führungsfläche, die jeweils senkrecht zur Längsachse ausgerichtet sind, axial begrenzt sein.

Die Führungsscheibe kann eine erste Führungsfläche und eine zweite Führungsfläche aufweisen, die einander abgewandt sind und senkrecht zur Längsachse ausgerichtet sind. Die Führungsscheibe ist über die Führungsflächen in der Ringausnehmung des Gehäuses radial verstellbar geführt.

Eine erste Schwimmscheibe der beiden Schwimmscheiben kann hierbei zwischen der ersten Führungsfläche der Ringausnehmung und der ersten Führungsfläche der Führungsscheibe angeordnet sein. Ferner kann eine zweite Schwimmscheibe der beiden Schwimmscheiben zwischen der zweiten Führungsfläche der Ringausnehmung und der zweiten Führungsfläche der Führungsscheibe angeordnet sein.

Wenn die Magnetisierung derart vorgesehen ist, dass die Schwimmscheiben jeweils an die Führungsfläche in der Ringausnehmung gezogen werden, entsteht einer Reibkraft bei radialer Bewegung der Führungsscheibe zwischen den Führungsfläche in der Ringausnehmung und der Schwimmscheiben. Wenn hingegen die Magnetisierung derart ausgebildet ist, dass die Schwimmscheiben an die Führungsscheibe herangezogen werden, entstehen bei radialer Bewegung der Schwimmscheiben Reibkräfte zwischen den Schwimmscheiben und den Führungsflächen der Führungsscheibe.

In einer beispielhaften Ausführungsform kann vorgesehen sein, dass in die erste Führungsfläche und in die zweite Führungsfläche der Ringausnehmung oder in die erste Führungsfläche und in die zweite Führungsfläche der Führungsscheibe oder in die Schwimmscheiben jeweils mindestens ein Magnet eingelassen ist.

Der zumindest eine Magnet kann hierbei in einer Ausnehmung sitzen, die in die jeweilige Führungsfläche bzw. in einer Oberfläche der jeweiligen Schwimmscheibe mündet.

Der zumindest eine Magnet kann hierbei bündig mit der jeweiligen Führungsfläche bzw. Oberfläche abschließen. Zur Vermeidung von Verschleiß des Magneten kann auch vorgesehen sein, dass dieser von der jeweiligen Führungsfläche bzw. Oberfläche zurückversetzt angeordnet ist.

Der zumindest eine Magnet kann in einer Ausgestaltung eine zylindrische Außenkontur aufweisen, wobei die Ausnehmung komplementär zur Außenkontur des Magneten ausgebildet ist. Die Ausnehmung kann hierbei insbesondere als Sacklochbohrung gestaltet sein.

Der zumindest eine Magnet kann ausschließlich durch seine magnetische Kraft in der jeweiligen Ausnehmung gehalten sein. Denkbar ist jedoch auch, dass der zumindest eine Magnet durch eine formschlüssige oder stoffschlüssige Verbindung gehalten ist. Zum Beispiel kann der zumindest eine Magnet verklebt sein.

In einer Ausgestaltung können mehrere Magnete vorgesehen sein, die über den Umfang verteilt angeordnet sind, insbesondere gleichmäßig über den Umfang verteilt sind.

Die Magnete können in unterschiedlichen Abständen zur Längsachse über den Umfang verteilt angeordnet sein.

Bei dem zumindest einen Magnet kann es sich um einen Permanentmagneten handeln.

Die Führungsscheibe weist zentral einen Führungsabschnitt mit beidseitig vorstehenden Zentrieransätzen auf. Von axialen Stirnflächen der Zentrieransätze gehen zentrale Bohrungen aus, die auch ineinander übergehen können und somit eine durchgehende Bohrung durch die Führungsscheibe bilden. Die äußeren Gelenkgabeln weisen jeweils einen Lagerzapfen auf, der zur Zentrierung der beiden Gelenke in eine der zentralen Bohrungen eingreift.

Die Schwimmscheiben werden durch die Magnetkräfte des zumindest einen Magneten am Gehäuse ohne Kontakt zur Führungsscheibe oder an der Führungsscheibe ohne Kontakt zum Gehäuse gehalten. Dadurch bewegt sich die Führungsscheibe bei kleinen Beugewinkeln des Doppelkreuzgelenks reibungsfrei auf einer Kreisbahn. Erst bei größeren Beugewinkeln, sobald die Innendurchmesser der Schwimmscheiben die Zentrieransätze der Führungsscheibe oder die Außendurchmesser der Schwimmscheiben die radial äußere Wand der Ringausnehmung tangieren, werden die Schwimmscheiben relativ zum Gehäuse bzw. relativ zur Führungsscheibe gegen die Reibkraft der Magnete bewegt.

Ausführungsbeispiele der Erfindung werden im Folgenden anhand der Zeichnungen näher erläutert. Hierin zeigt:
- Figur 1: ein perspektivischer Längsschnitt eines zentrierten Doppelkreuzgelenks mit Magneten im Gehäuse,
- Figur 2: einen Ausschnitt eines Längsschnitts des zentrierten Doppelkreuzgelenks nach Figur 1 im Bereich der Ringausnehmung mit Magneten in der Zentrierscheibe,
- Figur 3: einen Ausschnitt eines Längsschnitts des zentrierten Doppelkreuzgelenks nach Figur 1 im Bereich der Ringausnehmung mit Magneten in den Schwimmscheiben,
- Figur 4: eine Frontansicht des ersten Lagergehäuseabschnitts des Doppelkreuzgelenks gemäß Figur 1,
- Figur 5: eine Frontansicht einer weiteren Ausführungsform eines ersten Lagergehäuseabschnitts,
- Figur 6: eine perspektivische Ansicht der Zentrierscheibe gemäß Figur 2 und
- Figur 7: eine Frontansicht der Zentrierscheibe gemäß Figur 2.

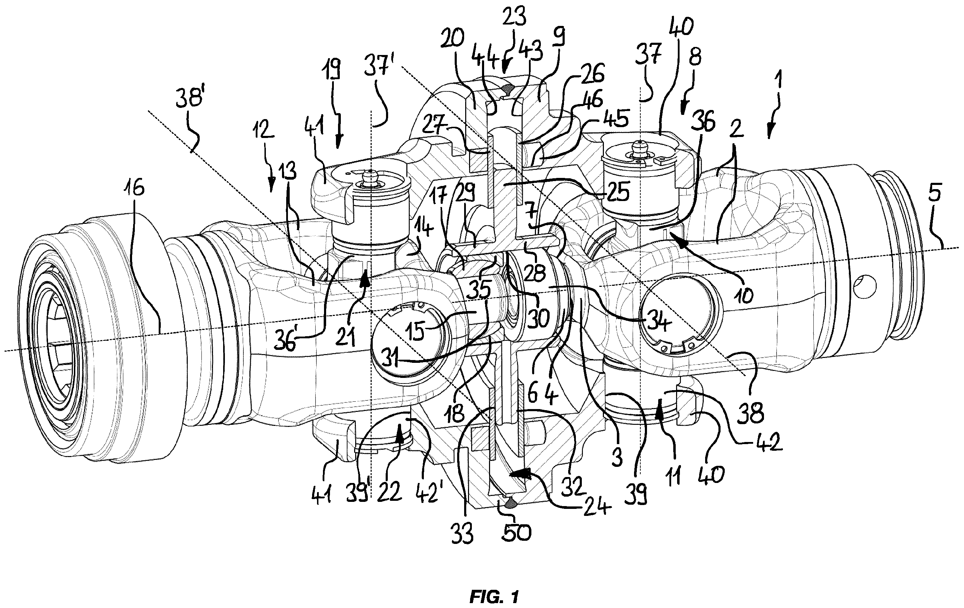

In Figur 1 ist ein erfindungsgemäßes Doppelkreuzgelenk teilweise geschnitten in einer perspektivischen Seitenansicht dargestellt. Das Doppelkreuzgelenk weist ein Gehäuse 23 mit zwei einzelnen Kreuzgelenken auf, die über einen Zentriermechanismus miteinander so verbunden sind, dass beide Gelenke jeweils den halben Beugewinkel bei Abwinklung einer Antriebswelle zu einer Abtriebswelle übernehmen, um damit einen Gleichlauf zu gewährleisten. Beide Kreuzgelenke sind im Wesentlichen gleich aufgebaut.

Das erste Kreuzgelenk des Doppelkreuzgelenks umfasst eine erste äußere Gelenkgabel 1 mit zwei ersten äußeren Gabelarmen 2, die durch eine erste Brücke 3 an ihren freien Enden miteinander verbunden sind. Die erste Brücke 3 trägt einen ersten Lagerzapfen 4 mit einer ersten Achse 5. Der Lagerzapfen 4 ist auf seiner Außenfläche zylindrisch gestaltet. Auf dem ersten Lagerzapfen 4 ist ein erster Lagerinnenring 6, der die Form einer Kugelschicht mit einer sphärischen Außenfläche 7 aufweist, entlang der ersten Achse 5 unverschieblich gehalten. Die erste äußere Gelenkgabel 1 ist über ein erstes Zapfenkreuz 10 mittels Wälzlager 11 mit der ersten inneren Gelenkgabel 8 gelenkig verbunden. Die erste innere Gelenkgabel 8 ist mit ihren beiden ersten inneren Gabelarmen 40 einstückig mit einem ersten Lagergehäuseabschnitt 9 ausgebildet.

Das zweite Gelenk umfasst eine zweite äußere Gelenkgabel 12, die zwei zweite äußere Gabelarme 13 aufweist. Die beiden zweiten Gabelarme 13 sind über eine zweite Brücke 14 miteinander verbunden. Die zweite Brücke 14 trägt einen zweiten Lagerzapfen 15, der eine zylindrische Außenfläche aufweist und auf der zweiten Achse 16 zentriert ist. Auf dem zweiten Lagerzapfen 15 ist ein zweiter Lagerinnenring 17 axial entlang der zweiten Achse 16 unverschieblich gehalten. Der zweite Lagerinnenring 17 besitzt eine sphärische Außenfläche 18. Die zweite äußere Gelenkgabel 12 ist über ein zweites Zapfenkreuz 21 mit den Gabelarmen 13 der zweiten inneren Gelenkgabel 19 mittels Wälzlager 22 gelenkig verbunden. Die zweite innere Gelenkgabel 19 ist mit ihren beiden zweiten inneren Gabelarmen 41 einstückig mit einem zweiten Lagergehäuseabschnitt 20 ausgebildet.

Der erste Lagergehäuseabschnitt 9 und der zweite Lagergehäuseabschnitt 20 bilden gemeinsam das Gehäuse 23 und sind miteinander verschweißt, können aber auch anders miteinander verbunden sein, wie zum Beispiel über Befestigungsschrauben. Die beiden Lagergehäuseabschnitte 9, 20 bilden zusammen eine, durch eine radial äußere Wand 50, radial außen geschlossene und radial innen offene Ringausnehmung 24, in welcher eine Führungsscheibe 25 zusammen mit einer ersten Schwimmscheibe 26 und einer zweiten Schwimmscheibe 27, die beidseitig der Führungsscheibe 25 angeordnet sind, radial verstellbar zwischen einer kreisringförmigen ersten Führungsfläche 54 und einer kreisringförmigen zweiten Führungsfläche 55 der Ringausnehmung 24 aufgenommen ist. Die Ringausnehmung 24 ist axial durch eine erste Führungsfläche 43 und eine zweite Führungsfläche 44 begrenzt, die einander gegenüberliegen. Die erste Schwimmscheibe 26 ist zwischen der ersten Führungsfläche 43 der Ringausnehmung 24 und der ersten Führungsfläche 32 der Führungsscheibe 25 angeordnet und durch diese geführt. Die zweite Schwimmscheibe 27 ist zwischen der zweiten Führungsfläche 44 der Ringausnehmung 24 und der zweiten Führungsfläche 33 der Führungsscheibe 25 angeordnet und durch diese geführt.

Die Durchmesser der beiden ringförmigen Schwimmscheiben 26, 27, der Führungsscheibe 25 und der Ringausnehmung 24 sind so aufeinander abgestimmt, dass die aufgrund der Abwinklung erforderliche Verstellung der Führungsscheibe 25 in der Ringausnehmung 24 ausgeführt werden kann, diese sicher gehalten ist und die Ringausnehmung bei jeder Abwinklung nach au-ßen geschlossen ist. Dementsprechend ist der größte Durchmesser der Ringausnehmung 24 größer als der Außendurchmesser der beiden ringförmigen Schwimmscheiben 26, 27 und größer als der Außendurchmesser der Führungsscheibe 25. Der Innendurchmesser der beiden ringförmigen Schwimmscheiben 26, 27 ist kleiner als der Außendurchmesser der Führungsscheibe 25. Die Führungsscheibe 25 weist des Weiteren einen zentralen ersten Zentrieransatz 28 und einen zweiten Zentrieransatz 29 auf, in denen eine zylindrische Lagerbohrung 30 mit einer Längsachse 31 vorhanden ist. Der erste Zentrieransatz 28 steht über die erste Führungsfläche 32 und der zweite Zentrieransatz 29 über die zweite Führungsfläche 33 der Führungsscheibe 25 vor. Der kleinste Durchmesser der Ringausnehmung 24 ist größer als der Außendurchmesser der Zentrieransätze 28, 29. Ferner muss entsprechend auch der Innendurchmesser der ringförmigen Schwimmscheiben 26, 27 ebenfalls größer bemessen sein als der Außendurchmesser der Zentrieransätze 28, 29.

Auf dem ersten Lagerinnenring 6 sitzt ein erster Lageraußenring 34 mit einer sphärischen Bohrung, die an die sphärische Außenfläche 7 des ersten Lagerinnenrings 6 angepasst ist. Der erste Lageraußenring 34 ist außen zylindrisch gestaltet und in der Lagerbohrung 30 verschiebbar geführt. Entsprechend ist der zweite Lagerinnenring 17 mit der sphärischen Außenfläche 18 in einer entsprechenden sphärischen Bohrung eines zweiten Lageraußenringes 35 aufgenommen. Der zweite Lageraußenring 35 ist ebenfalls in der Lagerbohrung 30 mit seiner zylindrischen Außenfläche verschiebbar aufgenommen.

Die beiden Zapfenkreuze 10, 21 weisen jeweils vier Zapfen 36, 36' auf, von denen jeweils zwei auf einer gemeinsamen Zapfenachse 37, 38 angeordnet sind. Die Zapfen 36, 36' sind mittels Wälzlager 11, 22 in Bohrungen 39 der Gabelarme 2, 13, 40, 41 gelagert. Die Wälzlager 11, 22 umfassen jeweils eine Lagerbüchse 42, welche in der jeweiligen Bohrung 39 einsitzt, sowie Wälzkörper (nicht dargestellt), die auf einer Außenfläche des jeweiligen Zapfens 36, 36` und einer Innenfläche der jeweiligen Lagerbüchse 42 abwälzen.

Aufgrund des erforderlichen Radialspiels zwischen den Schwimmscheiben 26, 27 und den zentralen Zentrieransätzen 28, 29 der Führungsscheibe 25 einerseits und dem Radialspiel zwischen den Schwimmscheiben 26, 27 und der Ringausnehmung 24 nach radial außen andererseits können sich die Schwimmscheiben 26, 27 zumindest in einem nicht vollständig abgewinkelten Zustand des Doppelkreuzgelenks, wie in Figur 1 dargestellt, radial innerhalb der Ringausnehmung 24 bewegen. Dies kann dazu führen, dass die Schwimmscheiben 26, 27 radial an die Zentrieransätze 28, 29 und/oder die radial äußere Wand der Ringausnehmung 24 anstoßen und Geräusche erzeugen.

Dies wird in der in Figur 1 gezeigten Ausführungsform dadurch verhindert, dass das Gehäuse 23 magnetisiert ist. Hierzu sind in dem ersten Lagergehäuseabschnitt 9 des Gehäuses 23 in der ersten Führungsfläche 43 über den Umfang verteilt mehrere Magnete 45 in Form von Permanentmagneten eingelassen. Ferner sind in dem zweiten Lagergehäuseabschnitt 20 des Gehäuses 23 in der zweiten Führungsfläche 44 ebenfalls über den Umfang verteilt mehrere Magnete 45 in Form von Permanentmagneten eingelassen. Die Magnete 45 sitzen jeweils in einer Ausnehmung 46, die in die jeweilige Führungsfläche 43, 44 mündet. Die Magnete 45 schließen bündig mit der jeweiligen Führungsfläche 43, 44 ab oder sind leicht zu dieser zurückversetzt.

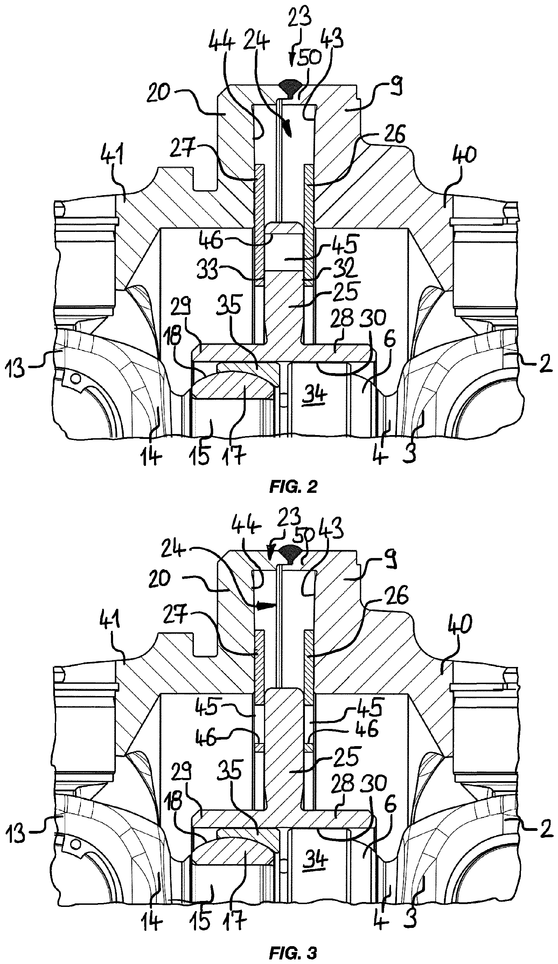

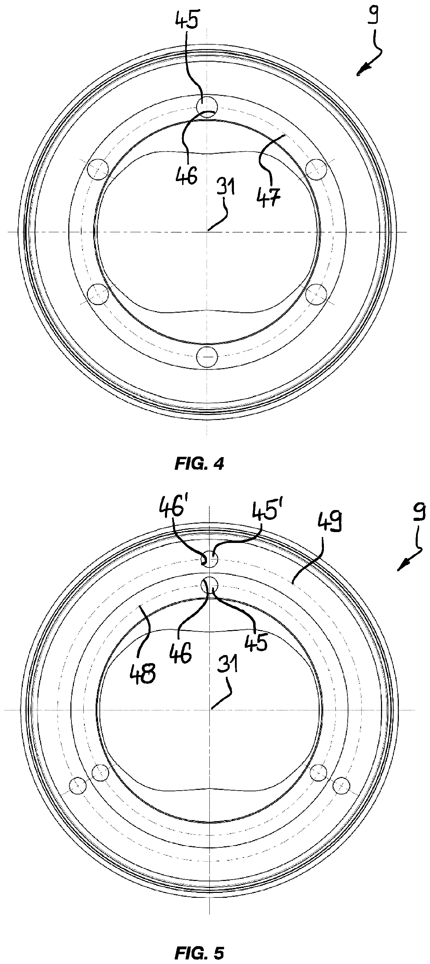

Die Figur 4 zeigt den ersten Lagergehäuseabschnitt 9 in einer Frontansicht. Hierbei ist zu erkennen, dass insgesamt sechs Magnete 45 über den Umfang eines Kreises 47 gleichmäßig verteilt angeordnet sind. Figur 5 zeigt eine alternative Ausführungsform des ersten Lagergehäuses 9 in einer Frontansicht. Hierbei sind insgesamt drei Magnete 45 über den Umfang eines inneren Kreises 48 gleichmäßig verteilt angeordnet. Zusätzlich sind drei weitere Magnete 45` über den Umfang eines äußeren Kreises 49 gleichmäßig verteilt angeordnet, wobei die Magnete 45` auf dem äußeren Kreis 49 dieselbe Winkellage aufweisen, wie die Magnete 45 auf dem inneren Kreis 48. Figur 2 zeigt einen Ausschnitt eines Längsschnitts des zentrierten Doppelkreuzgelenks noch Figur 1, wobei nicht das Gehäuse 23 magnetisiert ist, sondern die Führungsscheibe 25. Hierzu sind in der Führungsscheibe 25 über den Umfang verteilt mehrere Magnete 45 in Form von Permanentmagneten eingelassen. In der Führungsscheibe 25 sind hierfür Ausnehmungen 46 vorgesehen, die parallel zur Längsachse 31 verlaufen und die Führungsscheibe 25 vollständig durchdringen. Die Magnete 45 können hierbei jeweils mit der ersten Führungsfläche 32 und der zweiten Führungsfläche 33 der Führungsscheibe fluchten oder zu diesen rückversetzt angeordnet sein. Alternativ ist es auch denkbar, dass die Ausnehmungen 46 jeweils nur von einer der Führungsfläche 32, 33 der Führungsscheibe 25 ausgehen bzw. in diesem münden und als Sacklochbohrung ausgebildet sind. Somit müssten einerseits Ausnehmungen 46 vorgesehen sein, die in die erste Führungsfläche 32 der Führungsscheibe 25 münden, und andererseits Ausnehmungen 46 vorgesehen sein, die in die zweite Führungsfläche 33 der Führungsscheibe 25 münden.

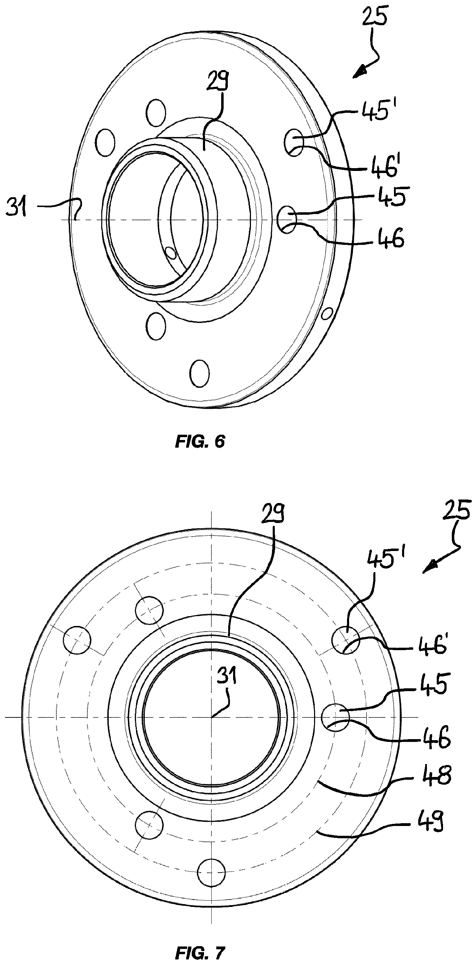

Die Figuren 6 und 7 zeigen die Führungsscheibe 25 in unterschiedlichen Ansichten. Es ist zu erkennen, dass zum einen drei Magnete 45 auf einem inneren Kreis 48 gleichmäßig verteilt angeordnet sind und zum anderen drei Magnete 45` auf einem äußeren Kreis 49 gleichmäßig verteilt angeordnet sind. Die Magnete 45` auf dem äußeren Kreis 49 sind über den Umfang winkelversetzt zu den Magneten 45 auf dem inneren Kreis 48 angeordnet.

Figur 3 zeigt einen Ausschnitt eines Längsschnitts des zentrierten Doppelkreuzgelenks nach Figur 1, wobei weder das Gehäuse 23 noch die Führungsscheibe 25 magnetisiert sind. Vielmehr sind in dieser Ausführungsform die Schwimmscheiben 26, 27 magnetisiert. Hierzu sind in den Schwimmscheiben 26, 27 über den Umfang verteilt mehrere Magnete 45 in Form von Permanentmagneten eingelassen. In den Schwimmscheiben 26, 27 sind hierfür Ausnehmungen 46 vorgesehen, die parallel zur Längsachse 31 verlaufen und die Schwimmscheiben 26, 27 vollständig durchdringen. Alternativ ist es auch denkbar, dass die Ausnehmungen 46 jeweils nur von einer der Oberfläche der Schwimmscheiben 26, 27 ausgehen bzw. in diese münden und als Sacklochbohrung ausgebildet sind. Die Magnete 45 können in beiden Fällen jeweils mit den Oberflächen der Schwimmscheiben 26, 27 fluchten oder zu diesen rückversetzt angeordnet sein.

### Bezugszeichenliste

- 1: erste äußere Gelenkgabel
- 2: erster äußerer Gabelarm
- 3: erste Brücke
- 4: erster Lagerzapfen
- 5: erste Achse
- 6: erster Lagerinnenring
- 7: kugelige Außenfläche
- 8: erste innere Gelenkgabel
- 9: erster Lagergehäuseabschnitt
- 10: erstes Zapfenkreuz
- 11: Wälzlager
- 12: zweite äußere Gelenkgabel
- 13: zweite äußere Gabelarme
- 14: zweite Brücke
- 15: zweiter Lagerzapfen
- 16: zweite Achse
- 17: zweiter Lagerinnenring
- 18: kugelige Außenfläche
- 19: zweite innere Gelenkgabel
- 20: zweiter Lagergehäuseabschnitt
- 21: zweites Zapfenkreuz
- 22: Wälzlager
- 23: Gehäuse
- 24: Ringausnehmung
- 25: Führungsscheibe
- 26: erste Schwimmscheibe
- 27: zweite Schwimmscheibe
- 28: erster Zentrieransatz
- 29: zweiter Zentrieransatz
- 30: Lagerbohrung
- 31: Längsachse
- 32: erste Führungsfläche der Führungsscheibe
- 33: zweite Führungsfläche der Führungsscheibe
- 34: erster Lageraußenring
- 35: zweiter Lageraußenring
- 36, 36': Zapfen
- 37, 37': Zapfenachse
- 38, 38': Zapfenachse
- 39, 39': Bohrung
- 40: erster innerer Gabelarm
- 41: zweiter innerer Gabelarm
- 42, 42': Lagerbüchse
- 43: erste Führungsfläche der Ringausnehmung
- 44: zweite Führungsfläche der Ringausnehmung
- 45, 45`: Magnet
- 46, 46`: Ausnehmung
- 47: Kreis
- 48: innerer Kreis
- 49: äußerer Kreis
- 50: radial äußere Wand

## Patentansprüche

1. Zentriertes Doppelkreuzgelenk umfassend
ein Gehäuse (23), das eine erste innere Gelenkgabel (8) und eine zweite innere Gelenkgabel (19) aufweist,
eine erste äußere Gelenkgabel (1), die über ein erstes Zapfenkreuz (10) gelenkig mit der ersten inneren Gelenkgabel (8) gelenkig verbunden ist,
eine zweite äußere Gelenkgabel (12), die über ein zweites Zapfenkreuz (21) gelenkig mit der zweiten inneren Gelenkgabel (19) gelenkig verbunden ist,
eine Ringausnehmung (24) im Gehäuse (23), die um eine Längsachse (31) des Gehäuses (23) angeordnet ist,
eine Führungsscheibe (25), die in der Ringausnehmung (24) des Gehäuses (23) radial verstellbar geführt ist, wobei die beiden äußeren Gelenkgabeln (1, 12) gelenkig mit der Führungsscheibe (25) gekoppelt sind, und
zwei Schwimmscheiben (26, 27), die in axialer Richtung beidseitig der Führungsscheibe (25) in der Ringausnehmung (24) angeordnet sind,
**dadurch gekennzeichnet,**
**dass** das Gehäuse (23), die Schwimmscheiben (26, 27) oder die Führungsscheibe (25), eine magnetische Kraft auf die Schwimmscheiben (26, 27) in Richtung der Längsachse (31) ausübend, magnetisiert ist/sind.

2. Zentriertes Doppelkreuzgelenk nach Anspruch 1,
**dadurch gekennzeichnet,**
**dass** die Ringausnehmung (24) eine erste Führungsfläche (43) und eine zweite Führungsfläche (44) aufweist, durch die die Ringausnehmung (24) axial begrenzt ist.

3. Zentriertes Doppelkreuzgelenk nach Anspruch 2,
**dadurch gekennzeichnet,**
**dass** die Führungsscheibe (25) eine erste Führungsfläche (32) und eine zweite Führungsfläche (33) aufweist, über die die Führungsscheibe (25) in der Ringausnehmung (24) des Gehäuses (23) radial verstellbar geführt ist.

4. Zentriertes Doppelkreuzgelenk nach Anspruch 3,
**dadurch gekennzeichnet,**
**dass** eine erste Schwimmscheibe (26) der beiden Schwimmscheiben (26, 27) zwischen der ersten Führungsfläche (43) der Ringausnehmung (24) und der ersten Führungsfläche (32) der Führungsscheibe (25) angeordnet ist, und dass eine zweite Schwimmscheibe (27) der beiden Schwimmscheiben (26, 27) zwischen der zweiten Führungsfläche (44) der Ringausnehmung (24) und der zweiten Führungsfläche (33) der Führungsscheibe (25) angeordnet ist.

5. Zentriertes Doppelkreuzgelenk nach Anspruch 4,
**dadurch gekennzeichnet,**
**dass** in die erste Führungsfläche (43) und in die zweite Führungsfläche (44) der Ringausnehmung (24) oder in die erste Führungsfläche (32) und in die zweite Führungsfläche (33) der Führungsscheibe (25) oder in die Schwimmscheiben (26, 27) jeweils zumindest ein Magnet (45, 45') eingelassen ist.

6. Zentriertes Doppelkreuzgelenk nach Anspruch 5,
**dadurch gekennzeichnet,**
**dass** der zumindest eine Magnet (45, 45') in einer Ausnehmung (46, 46`), die in die jeweilige Führungsfläche (32, 33, 43, 44) der Ringausnehmung (24) oder der Führungsscheibe (25) mündet, sitzt.

7. Zentriertes Doppelkreuzgelenk nach Anspruch 6,
**dadurch gekennzeichnet,**
**dass** der zumindest eine Magnet (45, 45') mit der jeweiligen Führungsfläche (32, 33, 43, 44) der Ringausnehmung (24) oder der Führungsscheibe (25) bündig abschließt oder zu dieser zurückversetzt angeordnet ist

8. Zentriertes Doppelkreuzgelenk nach Anspruch 7,
**dadurch gekennzeichnet,**
**dass** der zumindest eine Magnet (45, 45') eine zylindrische Außenkontur aufweist und die Ausnehmung (46. 46`) komplementär zur Außenkontur des Magneten (45, 45') ausgebildet ist.

9. Zentriertes Doppelkreuzgelenk nach einem der Ansprüche 6 bis 8,
**dadurch gekennzeichnet,**
**dass** der zumindest eine Magnet (45, 45') ausschließlich durch seine magnetische Kraft in der jeweiligen Ausnehmung (46, 46') gehalten ist.

10. Zentriertes Doppelkreuzgelenk nach einem der Ansprüche 5 bis 9,
**dadurch gekennzeichnet,**
**dass** mehrere Magnete (45, 45') über den Umfang verteilt angeordnet sind.

11. Zentriertes Doppelkreuzgelenk nach Anspruch 10,
**dadurch gekennzeichnet,**
**dass** die Magnete (45, 45') über den Umfang gleichmäßig verteilt sind.

12. Zentriertes Doppelkreuzgelenk nach Anspruch 10 oder 11,
**dadurch gekennzeichnet,**
**dass** die Magnete (45, 45`) in unterschiedlichen Abständen zur Längsachse (31) über den Umfang verteilt angeordnet sind.

13. Zentriertes Doppelkreuzgelenk nach einem der Ansprüche 6 bis 12,
**dadurch gekennzeichnet,**
**dass** der zumindest eine Magnet (45, 45') ein Permanentmagnet ist.

## Claims

1. A centered double universal joint comprising:
a housing (23) having a first inner joint fork (8) and a second inner joint fork (19),
a first outer joint fork (1) hingedly connected to the first inner joint fork (8) via a first trunnion cross (10),
a second outer joint fork (12) hingedly connected to the second inner joint fork (19) via a second trunnion cross (21),
an annular recess (24) in the housing (23) disposed about a longitudinal axis (31) of the housing (23),
a guide disc (25) that is guided in a radially adjustable manner in the annular recess (24) of the housing (23), the two outer joint forks (1, 12) being coupled in an articulated manner to the guide disc (25), and
two floating discs (26, 27) arranged in the axial direction on both sides of the guide disc (25) in the annular recess (24),
**characterized in**
**that** the housing (23), the floating discs (26, 27) or the guide disc (25) is/are magnetized, exerting a magnetic force on the floating discs (26, 27) in the direction of the longitudinal axis (31).

2. The centered double universal joint of claim 1,
**characterized in**
**that** the annular recess (24) comprises a first guide surface (43) and a second guide surface (44), by which the annular recess (24) is axially limited.

3. The centered double universal joint of claim 2,
**characterized in**
**that** the guide disc (25) has a first guide surface (32) and a second guide surface (33), via which the guide disc (25) is guided in a radially adjustable manner in the annular recess (24) of the housing (23).

4. The centered double universal joint of claim 3,
**characterized in**
**that** a first floating disc (26) of the two floating discs (26, 27) is arranged between the first guide surface (43) of the annular recess (24) and the first guide surface (32) of the guide disc (25), and
**that** a second floating disc (27) of the two floating discs (26, 27) is arranged between the second guide surface (44) of the annular recess (24) and the second guide surface (33) of the guide disc (25).

5. The centered double universal joint of claim 4,
**characterized in**
**that** at least one magnet (45, 45') is inserted into each of the first guide surface (43) and the second guide surface (44) of the annular recess (24) or into each of the first guide surface (32) and the second guide surface (33) of the guide disc (25) or into each of the floating discs (26, 27).

6. The centered double universal joint of claim 5,
**characterized in**
**that** the at least one magnet (45, 45') is seated in a recess (46, 46') which opens into the respective guide surface (32, 33, 43, 44) of the annular recess (24) or of the guide disc (25).

7. The centered double universal joint of claim 6,
**characterized in**
**that** the at least one magnet (45, 45') is flush with the respective guide surface (32, 33, 43, 44) of the annular recess (24) or of the guide disc (25) or is arranged set back relative thereto.

8. The centered double universal joint of claim 7,
**characterized in**
**that** the at least one magnet (45, 45') has a cylindrical outer contour and the recess (46, 46') is formed complementarily to the outer contour of the magnet (45, 45').

9. The centered double universal joint of one of claims 6 to 8,
**characterized in**
**that** the at least one magnet (45, 45') is held in the respective recess (46, 46') exclusively by its magnetic force.

10. The centered double universal joint of one of claims 5 to 9,
**characterized in**
**that** several magnets (45, 45') are arranged distributed over the circumference.

11. The centered double universal joint of claim 10,
**characterized in**
**that** the magnets (45, 45') are evenly distributed around the circumference.

12. The centered double universal joint of claim 10 or 11,
**characterized in**
**that** the magnets (45, 45') are arranged at different distances to the longitudinal axis (31) distributed over the circumference.

13. The centered double universal joint of one of claims 6 to 12, **characterized in**
**that** the at least one magnet (45, 45') is a permanent magnet.

## Revendications

1. Double joint universel centré, comprenant un corps (23), qui comporte une première fourche (8) de joint interne et une deuxième fourche (19) de joint interne,
une première fourche (1) de joint externe, qui par l'intermédiaire d'un premier croisillon de cardan (10) est assemblée de manière articulée avec la première fourche (8) de joint interne,
une deuxième fourche (12) de joint externe, qui par l'intermédiaire d'un deuxième croisillon de cardan (21) est assemblée de manière articulée avec la deuxième fourche (19) de joint interne,
un évidement (24) annulaire dans le corps (23), qui est placé autour d'un axe longitudinal (31) du corps (23),
un disque de guidage (25), qui est guidé dans l'évidement (24) annulaire du corps (23) en étant ajustable en direction radiale, les deux fourches (1, 12) de joint externes étant accouplées de manière articulée avec le disque de guidage (25) et
deux disques flottants (26, 27), qui dans la direction axiale sont placés de part et d'autre du disque de guidage (25) dans l'évidement (24) annulaire, **caractérisé**
**en ce que** le corps (23), les disques flottants (26, 27) ou le disque de guidage (25), exerçant une force magnétique sur les disques flottants (26, 27) en direction de l'axe longitudinal (31) est / sont aimanté(s) .

2. Double joint universel centré selon la revendication 1,
**caractérisé**
**en ce que** l'évidement (24) annulaire comporte une première surface de guidage (43) et une deuxième surface de guidage (44), par lesquelles l'évidement (24) annulaire est délimité en direction axiale.

3. Double joint universel centré selon la revendication 2,
**caractérisé**
**en ce que** le disque de guidage (25) comporte une première surface de guidage (32) et une deuxième surface de guidage (33), par l'intermédiaire desquelles le disque de guidage (25) est guidé dans l'évidement (24) annulaire du corps (23), en étant ajustable en direction radiale.

4. Double joint universel centré selon la revendication 3,
**caractérisé**
**en ce qu'**un premier disque flottant (26) des deux disques flottants (26, 27) est placé entre la première surface de guidage (43) de l'évidement (24) annulaire et la première surface de guidage (32) du disque de guidage (25) et
**en ce qu'**un deuxième disque flottant (27) des deux disques flottants (26, 27) est placé entre la deuxième surface de guidage (44) de l'évidement (24) annulaire et la deuxième surface de guidage (33) du disque de guidage (25).

5. Double joint universel centré selon la revendication 4,
**caractérisé**
**en ce que** dans la première surface de guidage (43) et dans la deuxième surface de guidage (44) de l'évidement (24) annulaire ou dans la première surface de guidage (32) et dans la deuxième surface de guidage (33) du disque de guidage (25) ou dans les disques flottants (26, 27) est incorporé chaque fois au moins un aimant (45, 45').

6. Double joint universel centré selon la revendication 5,
**caractérisé**
**en ce que** l'au moins un aimant (45, 45') est logé dans un évidement (46, 46'), qui débouche dans la surface de guidage (32, 33, 43, 44) concernée de l'évidement (24) annulaire ou du disque de guidage (25).

7. Double joint universel centré selon la revendication 6,
**caractérisé**
**en ce que** l'au moins un aimant (45, 45') se termine à fleur de la surface de guidage (32, 33, 43, 44) concernée de l'évidement (24) annulaire ou du disque de guidage (25) ou est placé en retrait par rapport à celle-ci.

8. Double joint universel centré selon la revendication 7,
**caractérisé**
**en ce que** l'au moins un aimant (45, 45') comporte un contour extérieur cylindrique et **en ce que** l'évidement (46, 46') est conçu de manière complémentaire au contour extérieur de l'aimant (45, 45').

9. Double joint universel centré selon l'une quelconque des revendications 6 à 8,
**caractérisé**
**en ce que** l'au moins un aimant (45, 45') est maintenu exclusivement par une force magnétique dans l'évidement (46, 46') concerné.

10. Double joint universel centré selon l'une quelconque des revendications 5 à 9,
**caractérisé**
**en ce que** plusieurs aimants (45, 45') sont placés en distribution sur la périphérie.

11. Double joint universel centré selon la revendication 10,
**caractérisé**
**en ce que** les aimants (45, 45') sont distribués régulièrement sur la périphérie.

12. Double joint universel centré selon la revendication 10 ou 11,
**caractérisé**
**en ce que** les aimants (45, 45') sont placés en distribution sur la périphérie avec différents écarts par rapport à l'axe longitudinal (31).

13. Double joint universel centré selon l'une quelconque des revendications 6 à 12,
**caractérisé**
**en ce que** l'au moins un aimant (45, 45') est un aimant permanent.
